(19) Europäisches Patentamt
European Patent Office
Office européen des brevets

(11) **EP 4 178 245 A1**

(12) **EUROPEAN PATENT APPLICATION**

(43) Date of publication:
**10.05.2023 Bulletin 2023/19**

(21) Application number: **21306539.4**

(22) Date of filing: **03.11.2021**

(51) International Patent Classification (IPC):
***H04W 12/30*** *(2021.01)*

(52) Cooperative Patent Classification (CPC):
**H04W 12/35**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Thales Dis France SAS**
**92190 Meudon (FR)**

(72) Inventors:
• **FRANCHI, Christophe**
**13105 MIMET (FR)**

• **DANY, Vincent**
**13400 AUBAGNE (FR)**
• **BOINO, Richard**
**13620 CARRY LE ROUET (FR)**
• **JUMELLE, François**
**13420 GEMENOS (FR)**

(74) Representative: **Scheer, Luc**
**Thales Dis France SAS**
**Intellectual Property Department**
**Avenue du Jujubier**
**Zone Athelia IV**
**13705 La Ciotat Cedex (FR)**

(54) **A METHOD FOR PERSONALIZING A SECURE ELEMENT AND CORRESPONDING SECURE ELEMENT**

(57)   The invention concerns a method for personalizing a secure element intended to be associated with a telecommunication terminal, the method comprising a step of sending an APDU container to the secure element from a personalization equipment, the APDU container containing diversified data, the method comprising:
- Sending from the personalization equipment to the secure element the APDU container comprising a first part comprising ciphered diversified data and a second part comprising an APDU command, and fixed data;
- Deciphering by the OS of the secure element the diversified data and installing the diversified data in a secured memory.

## Unique figure

**Description**

The present invention concerns telecommunications and more precisely the electrical personalization of a removable (not embedded (eUICC) or integrated (iUICC)) secure element, like a smart card, a UICC or a Sim card.

Such a secure element is intended to collaborate with a telecommunication terminal, like a smartphone, a PDA or a M2M device for example.

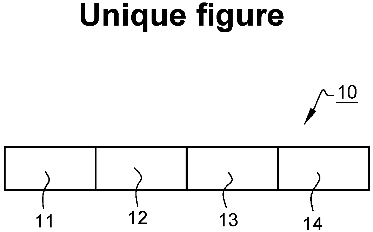

Before issuing a secure element, a card manufacturer has to load and install applications, create a file system, etc... All of these steps are common to a group of secure elements, however some data (i.e. diversified data) of a secure element are unique per secure element (to authenticate to a mobile network for example): cryptographic keys, PINs, certificates, files, etc... before being sold to an end-user by a MNO (Mobile Network Operator). There are also some cases when third party application developers provide their own personalization APDU to be played in the secure element manufacturer factories. Such a personalization occurs in a factory, typically in the factory where the secure element has been manufactured. The personalization is done by a personalization equipment that sends several APDUs to the secure element. Such an APDU contains a header, fixed data and diversified data, like for example shown in figure 1.

In this figure, an APDU 10 containing personalization data is represented. It contains a header 11, fixed data 12, diversified data 13 and other fixed data 14.

The fixed data 12 and 14 are mandatory but they can be comprised in a same single field (fields 12 and 14 can be consecutive at the place of field 12 or 14), the header 11 indicating where the different data are present, in particular where are the diversified data.

This secure element has an ISO format (format of a credit card), or the half of an ISO format or a quarter thereof and can be of the formats 1FF to 4FF.

The way that diversified data are loaded on secure elements is generally done in a clear way (no encryption of the diversified data). This can be done easily in the factory of the card manufacturer since the confidentiality of the personalized data is ensured.

It can however happen that the electrical personalization does not occur in the factory of the manufacturer, but in a factory of a third-party, for different reasons:

- Some countries require that, for confidentiality reasons, the personalization has to be realized in these countries, for example in UK;
- Some manufacturers prefer to outsource the personalization of their secure elements for capacity reasons, internal problems, no availability of an adequate personalization equipment due to the form factor (for example absence of a personalization equipment able to personalize quarter ISO cards),...

In these situations, personalization of a secure element cannot be done in a clear way (personalization data have to be encrypted).

The invention proposes a solution to this problem.

For this purpose, the invention proposes a method for personalizing a secure element intended to be associated with a telecommunication terminal, the method comprising a step of sending an APDU container to the secure element from a personalization equipment, the APDU container containing diversified data, the method comprising:

- Sending from the personalization equipment to the secure element the APDU container comprising a first part comprising ciphered diversified data and a second part comprising an APDU command, and fixed data;
- Deciphering by the OS of the secure element the diversified data and installing the diversified data in a secured memory.

Preferably, the first part comprises:

  ○ A header;
  ○ An offset indicating the position of the diversified data in the APDU container;
  ○ The length of the diversified data in the APDU;
  ○ The ciphered diversified data;

and the second part comprises:

  ○ A header;
  ○ Fixed data.

The invention also concerns a secure element comprising an OS, the OS being configured to receive an APDU container from a personalization equipment, the APDU container comprising a first part comprising ciphered diversified data and a second part comprising an APDU command and fixed data, the OS being configured to decipher the diversified data and install the diversified data in a secured memory.

The invention proposes, when the secure element (also called hereinafter smartcard) personalization is done in a third party factories, that the smartcard manufacturer provides the personalization APDU scripts: The third party factories should not modify these APDU scripts and does not need to know the behavior of these APDU scripts. More importantly, the diversified data that are in clear in the APDU scripts need to be now managed in a confidential way. To avoid heavy redesign of existing APDU personalization commands (and smartcard OS) and also to be able to manage the case of dedicated third party application personalization, the invention introduces the notion of APDU container and confidential data.

We can take as an example an APDU command that contains a diversified data that is embedded in a clear way, the format of the APDU could be like represented in figure 1 (such an APDU command is typically used when the smartcard manufacturer realizes in his factory the personalization of the smartcard):

APDU = Header + Fixed data + Clear diversified data + Fixed data

The header always exists in an APDU command, to be T=0 compliant.

The important purpose of the invention is to avoid heavy smartcard OS redesigning or different behavior of the previous APDU and so to be able to manage the diversified data in a confidential way. In this respect, it is proposed to embed this APDU into a new APDU container (and then there is no more clear diversified data):

APDU Container =

Header + Offset diversified data in APDU + Length of diversified data in APDU

+ Ciphered diversified data

+ (Header + Fixed data + Fake diversified data + Fixed data) <=== APDU

This APDU container is managed by the smartcard OS at a low level:

- The APDU container is received by the smartcard during the personalization process in the third party factory;
- The ciphered diversified data (confidential data) are deciphered by the OS smartcard to retrieve the diversified data;
- The fake diversified data are then replaced by the deciphered diversified data into the original APDU;
- The original APDU with clear diversified data can now be managed normally by the smartcard OS thru Security Domain, Applet, etc.

The APDU container (sent by a personalization equipment) thus constitutes a single APDU having two parts: A first part comprising ciphered diversified data and a second part comprising an APDU command and fixed data.

The fixed data are here separated in two fields but using a single field comprising these fixed data is also possible.

The OS of the secure element deciphers the diversified data and installs them in a secured memory of the secure element.

In this example, the first part comprises:

○ A header
○ An offset indicating the position of the diversified data and the position of fake diversified data in the APDU container
○ The length of the diversified data in the APDU
○ The ciphered diversified data

And the second part comprises:

○ A header
○ Fixed data

∘ Fake diversified data

So there is a single APDU in the container, with two parts that are reassembled by the OS during the decryption phase.

The OS of the secure element only needs to me slightly modified: One module is added to the OS for recognizing the container and for decrypting the ciphered data.

Sending fake diversified data is not mandatory but it simplifies the job of the OS that has only to replace these fake diversified data by the deciphered diversified data.

AES as a strong cryptographic algorithm can be used to cipher the diversified data. The cryptographic key used to decipher confidential data can be populated by the smartcard manufacturer into the master personalization script (the content of the script is ciphered using smartcard bootloader keys).

For the encryption, the following scheme can be used:

If xxx are the diversified data and xxx' are the ciphered diversified data, then:

$$xxx' = AES(xxx \mid Padding)$$

The AES algorithm used is AES CBC with ISO9797 M2 padding (0x8000...).

AES ciphering key is 128 bits long.

Padding is used even if diversified data length is multiple of 16 bytes.

Length of diversified data is known and then it is possible to compute the expected length of diversified data (that should be minimal to have fast communication between the secure element and the personalization equipment).

The invention also concerns a secure element comprising an OS, the OS being configured to receive an APDU container from a personalization equipment, the APDU container comprising a first part comprising ciphered diversified data and a second part comprising an APDU command and fixed data, the OS being configured to decipher the diversified data and install the diversified data in a secured memory.

The proposed solution is very efficient in term of personalization time (cryptographic operations reduced to a minimum) and also in term of generation of the different APDU scripts by the smartcard manufacturer (there are different scripts to generate per card).

The invention permits to personalize smartcards in a confidential way in regard to new requirements (Subcontracting, licensing, countries regulations) and avoids heavy redesign of existing APDU personalization behavior and smartcard OS. Also, third party applications with proprietary personalization commands can be managed in a confidential way without any rework.

**Claims**

1. A method for personalizing a secure element intended to be associated with a telecommunication terminal, said method comprising a step of sending an APDU container to said secure element from a personalization equipment, said APDU container containing diversified data, said method comprising:

   - Sending from said personalization equipment to said secure element said APDU container comprising a first part comprising ciphered diversified data and a second part comprising an APDU command, and fixed data;
   - Deciphering by the OS of said secure element said diversified data and installing said diversified data in a secured memory.

2. A method according to claim 1, wherein:

   - Said first part comprises:

     ∘ A header;
     ∘ An offset indicating the position of said diversified data in said APDU container;
     ∘ The length of said diversified data in said APDU;
     ∘ Said ciphered diversified data;

   - Said second part comprises:

     ∘ A header;

　∘ Fixed data.

3. A secure element comprising an OS, said OS being configured to receive an APDU container from a personalization equipment, said APDU container comprising a first part comprising ciphered diversified data and a second part comprising an APDU command and fixed data, said OS being configured to decipher said diversified data and install said diversified data in a secured memory.

# Unique figure

Europäisches
Patentamt

European
Patent Office

Office européen
des brevets

# EUROPEAN SEARCH REPORT

Application Number

EP 21 30 6539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/197525 A1 (BIEHLMANN CHRISTOPHE [US]) 27 June 2019 (2019-06-27) * par. 1-10, 63-94 * | 1-3 | INV. H04W12/30 |
| X | Wolfgang Rankl ET AL: "Smart Card Handbook, 4th Edition" In: "Smart Card Handbook, 4th Edition", 19 July 2010 (2010-07-19), Wiley, Chichester, West Sussex, U.K, XP055269635, ISBN: 978-0-470-74367-6 pages 348-350,Ch17,C, * sub-chapter 8.4.5 * | 1-3 | |
| A | US 6 005 942 A (CHAN ALFRED [US] ET AL) 21 December 1999 (1999-12-21) * abstract * | 1-3 | |
| A | Wolfgang Rankl ET AL: "Smart Card Handbook - Chapter 14", , 19 July 2010 (2010-07-19), pages 567-632, XP055510891, Chichester, West Sussex, U.K ISBN: 978-0-470-74367-6 Retrieved from the Internet: URL:file:///C:/Users/SI02434/Downloads/Chapter%2014,%20Smart%20card%20handbook.pdf [retrieved on 2018-09-28] * sub-chapters 14.7, 14.8 * | 1-3 | TECHNICAL FIELDS SEARCHED (IPC) H04W |

The present search report has been drawn up for all claims

| Place of search | Date of completion of the search | Examiner |
|---|---|---|
| Munich | 31 March 2022 | Murgan, Tudor A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6539

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2022

| Patent document cited in search report | | | Publication date | Patent family member(s) | | | Publication date |
|---|---|---|---|---|---|---|---|
| US 2019197525 | A1 | | 27-06-2019 | CA | 3085437 | A1 | 27-06-2019 |
| | | | | CN | 111801671 | A | 20-10-2020 |
| | | | | EP | 3729321 | A1 | 28-10-2020 |
| | | | | KR | 20200104885 | A | 04-09-2020 |
| | | | | US | 2019197525 | A1 | 27-06-2019 |
| | | | | WO | 2019126760 | A1 | 27-06-2019 |
| US 6005942 | A | | 21-12-1999 | AT | 281680 | T | 15-11-2004 |
| | | | | AU | 746459 | B2 | 02-05-2002 |
| | | | | CA | 2288824 | A1 | 01-10-1998 |
| | | | | DE | 69827405 | T2 | 19-05-2005 |
| | | | | EP | 1021801 | A1 | 26-07-2000 |
| | | | | US | 6005942 | A | 21-12-1999 |
| | | | | US | 6233683 | B1 | 15-05-2001 |
| | | | | WO | 9843212 | A1 | 01-10-1998 |

EPO FORM P0459

For more details about this annex : see Official Journal of the European Patent Office, No. 12/82